# FASCICULE DE BREVET EUROPEEN

(11) **EP 2 072 760 B1**
(45) Date de publication et mention de la délivrance du brevet: **21.03.2012**
(21) Numéro de dépôt: 07123965.1
(22) Date de dépôt: 21.12.2007
(51) Int. Cl.: F01D 9/04, F04D 29/54

(54) **Dispositif de fixation d'aubes à une virole d'étage de stator d'une turbomachine et procédé de fixation associé**
Vorrichtung zur Befestigung von Leitschaufeln an einen Stufenring des Stators einer Strömungsmaschine und entsprechendes Befestigungsverfahren
Device for attaching vanes to a stage collar of a turbomachine stator and associated attachment method

(43) Date de publication de la demande: 24.06.2009
(73) Titulaire: Techspace Aero, 4041 Milmort - Herstal (BE)
(72) Inventeur: Delobel, Pierre, Joseph, Filelmo, 4031, Angleur (BE); Hiernaux, Stéphane, 4300, Waremme (BE)
(74) Mandataire: Ilgart, Jean-Christophe

(56) Documents cités:
- FR-A- 2 697 285
- US-A- 2 812 159
- US-A- 2 963 272

## Description

### DOMAINE TECHNIQUE

L'invention concerne le domaine des parties formant le stator des turbomachines et plus particulièrement des turboréacteurs.

Elle concerne en particulier les étages de stator de turbomachines, et de redresseur de compression axial de turboréacteurs.

Elle a trait à un nouveau dispositif et procédé de fixation d'aubes sur les viroles rentrant dans la constitution de ce type d'étages.

### ART ANTÉRIEUR

Actuellement, on peut distinguer trois grands types de dispositifs employés pour fixer une aube à une virole d'étage de stator de turboréacteur.

Le premier type consiste à souder les aubes à la virole. La soudure utilisée nécessite une compatibilité métallurgique entre les matériaux de l'aube et de la virole, ce qui exclut certains couples de matériaux, ainsi que l'emploi de matériaux composites. La mise en oeuvre de la soudure est également difficile à réaliser et nécessite un appareillage coûteux.

Le deuxième type consiste à boulonner les aubes à la virole. Le boulonnage introduit un surplus de masse dû aux écrous utilisés, ainsi qu'un coût élevé de l'aube induit par le filetage requis de la tige.

Le troisième type enfin consiste à riveter les aubes à la virole. Le rivetage présente l'inconvénient majeur d'un risque de perte de la tête de rivet dans la veine aérodynamique de la turbomachine.

On peut citer également les brevets EP 1 213 483 et EP 1 626 163 qui décrivent chacun des solutions spécifiques de maintien de l'aube à la virole intérieure d'étage de redresseur de compresseur axial d'un turboréacteur, en cas d'ingestion d'objets étrangers par ce dernier et casse de tout ou partie de la zone centrale des aubes. Les solutions décrites ne concernent pas la fixation d'aubes à la virole extérieure du turboréacteur. De toute manière, elles ne sont pas adaptées à la fixation aux viroles extérieures, car cette adaptation fictive, par exemple en noyant l'extrémité de l'aube et son système de maintien dans une résine élastomère, ne permettrait en aucun cas un positionnement précis de l'aube par rapport à la virole extérieure.

Le but de l'invention est alors de proposer un nouveau type de fixation d'aube à une virole d'étage de stator d'une turbomachine qui pallie les inconvénients précités et, en particulier qui permette une fixation avec positionnement précis d'une aube à la virole extérieure d'un étage de stator.

### EXPOSÉ DE L'INVENTION

A cet effet, l'invention concerne un étage de stator comprenant au moins une virole dont la périphérie est munie d'ajours, et une pluralité d'aubes fixes comprenant une extrémité logée dans un des ajours en faisant saillie à l'extérieur de la virole, dans lequel la fixation d'une aube avec la virole est réalisée par un élément formant coin inséré dans une ouverture pratiquée à l'extrémité de l'aube logée dans l'ajour, la forme et les dimensions du coin et de l'ouverture étant choisies pour mettre en précontrainte radiale l'aube vers l'extérieur.

Les termes « intérieure », « interne » et « extérieure » et « externe » sont à comprendre en tenant compte de l'agencement par rapport au rotor de la turbomachine. Ainsi, la virole extérieure est celle qui est agencée la plus à l'extérieur du rotor.

Ainsi, selon l'invention, on prévoit un nouveau type de fixation par insertion d'un coin qui permet d'appliquer une précontrainte radiale entre l'aube et la virole, ce qui améliore leur liaison. Le positionnement de l'aube par rapport à la virole est en outre précis et ne nécessite pas de moyens coûteux et compliqués à mettre en oeuvre pour atteindre une telle précision.

Selon un mode de réalisation avantageux, le coin est choisi de manière à modifier le comportement fréquentiel de l'étage de stator par action sur ledit coin. Ainsi, le coin peut comprendre une masse en matériau piézoélectrique.

Selon une construction avantageuse, les aubes comprennent chacune une partie formant plateforme à l'extrémité de la partie centrale formant pale et, en contact avec la face interne de la virole, la plate-forme étant prolongée d'une anse saillante vers l'extérieur munie de l'ouverture dans laquelle est inséré le coin.

Le coin selon l'invention peut comprendre une masse en matériau compressible, le matériau étant au moins en partie compressé en position insérée. Cela permet de modifier de manière passive le comportement dynamique vibratoire de l'aube, par exemple en déplaçant les fréquences propres de l'étage de stator.

Le coin peut également comprendre une plaque recourbée et à effet ressort, les branches de la plaque en position insérée étant rapprochées mutuellement, avec l'une des branches en contact avec la face externe de la virole et l'autre des branches en contact avec le bord externe de l'ouverture.

Selon une variante, le bord externe de l'ouverture est orthogonal à l'aube, les branches de la plaque insérée formant alors un U.

Selon une autre variante, le bord externe de l'ouverture n'est pas orthogonal à l'aube, les branches de la plaque insérée formant alors un V.

De préférence, la branche en contact avec le bord externe de l'ouverture comporte au moins une excroissance formant cran permettant le maintien en position insérée du coin lors du fonctionnement de la turbomachine dans lequel l'étage de stator est intégré. De préférence encore, il peut être prévu deux crans séparés d'une distance sensiblement égale à la largeur du bord externe de l'ouverture avec laquelle ils sont en contact.

Plusieurs variantes de réalisation de la plaque recourbée peuvent être prévues : à partir d'une pièce métallique usinée, d'une tôle déformée ou d'une pièce forgée.

De préférence, la virole à laquelle l'aube est fixée avec l'insertion du coin est la virole extérieure de l'étage.

L'étage de stator constitue avantageusement un étage de redresseur de compresseur d'un turboréacteur.

L'invention concerne également une turbomachine comprenant au moins un étage de stator mentionné ci-dessus.

L'invention concerne enfin un procédé de fixation d'une aube à une virole d'étage de stator dans lequel on réalise les étapes suivantes :
a) réalisation d'une aube avec une partie centrale formant pale et une ouverture à une extrémité de la pale,
b) logement de l'extrémité avec ouverture dans un ajour pratiqué dans une virole de l'étage de stator,
c) traction sur l'aube vers l'extérieur de sorte à avoir une partie de l'ouverture à l'extérieur de la virole et à atteindre une précontrainte radiale de l'aube,
d) insertion d'un élément formant coin dans l'ouverture avec contact avec la virole,
e) relâchement de la traction sur l'aube, la forme et les dimensions du coin et de l'ouverture étant choisies pour mettre en précontrainte radiale l'aube vers l'extérieur après l'étape e).

Selon un mode de réalisation avantageux, la virole à laquelle est fixée l'aube est la virole extérieure de l'étage de stator et on réalise au préalable de l'étape b) une fixation de l'aube avec la virole intérieure de l'étage de stator sans précontrainte radiale.

Selon une variante, on réalise l'étape a) avec une partie de l'aube formant plateforme transversale à la pale, et la précontrainte radiale de l'aube selon l'étape c) avec contact entre la plateforme et la virole.

### BRÈVE DESCRIPTION DES DESSINS

D'autres avantages et caractéristiques de l'invention ressortiront mieux à la lecture de la description détaillée faite en référence aux figures suivantes dans lesquelles :
- la figure 1 est une vue schématique en perspective partielle d'un étage de stator d'un compresseur de turboréacteur selon l'invention,
- la figure 1A est une vue schématique en perspective partielle d'une aube conforme à l'invention,
- les figures 2A à 2E sont des vues de côté de différentes variantes d'un coin utilisé selon l'invention avant son insertion dans une ouverture d'aube,
- les figures 3A à 3E sont des vues de coupe radiale d'une partie d'un étage de stator comprenant respectivement les coins selon les figures 2A à 2E en position insérée dans l'ouverture d'aube.

### EXPOSÉ DÉTAILLÉ DE MODES DE RÉALISATION PARTICULIERS

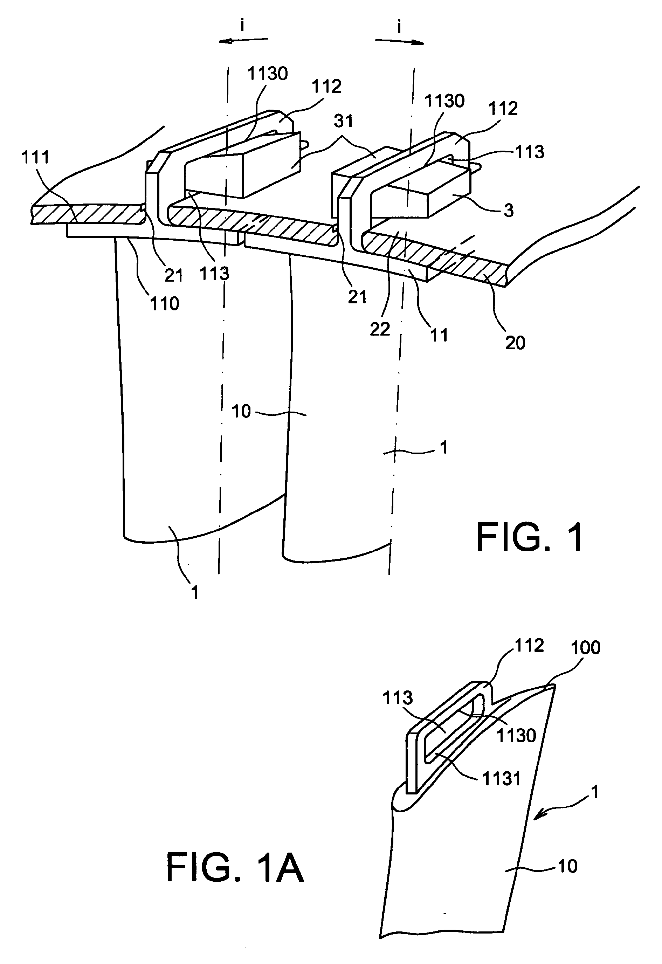

Tel que représenté en figure 1, l'étage de redresseur de compresseur d'un turboréacteur comprend une pluralité d'aubes 1 fixées à une virole extérieure 2 et une virole intérieure non représentée ici.

Chaque aube 1 comprend une partie centrale formant pale 10 et une partie formant plateforme 11 dont la face interne 110 assure la définition de la veine aérodynamique et dont la face externe 111 est prolongée par une anse 112 saillante vers l'extérieur munie d'une ouverture 113.

La virole extérieure 2 est une pièce monobloc sous la forme d'une couronne annulaire dont la face interne 20 est usinée en creux de telle sorte que les plateformes 11 des aubes 1 peuvent s'y emboîter. La virole 2 est également percée d'ajours oblongs 21 dont les dimensions permettent le passage des anses 112 des aubes 1.

La fixation entre chaque aube 1 et la virole extérieure 2 est assurée par une pièce formant coin 3 insérée à l'intérieur d'une ouverture 113 en contact direct avec la virole 2. La forme et les dimensions de l'ouverture 113 et du coin 3 permettent de mettre en précontrainte radiale l'aube 1 vers l'extérieur en dehors de tout fonctionnement du turboréacteur dans lequel est implanté l'étage de redresseur.

Dans le mode de réalisation de la figure 1A, l'aube 1 ne comprend pas de plate-forme mais une anse 112 s'étendant directement dans le prolongement de la partie pale 10. Sur cette figure 1A, l'ouverture 113 comprend un bord interne 1131 et un bord externe qui forment une portion tronconique droite. Selon ce mode de réalisation, la virole extérieure 2 ne nécessite pas d'usinage en creux pour sa face interne : celle-ci peut définir une forme générale cylindrique ou conique.

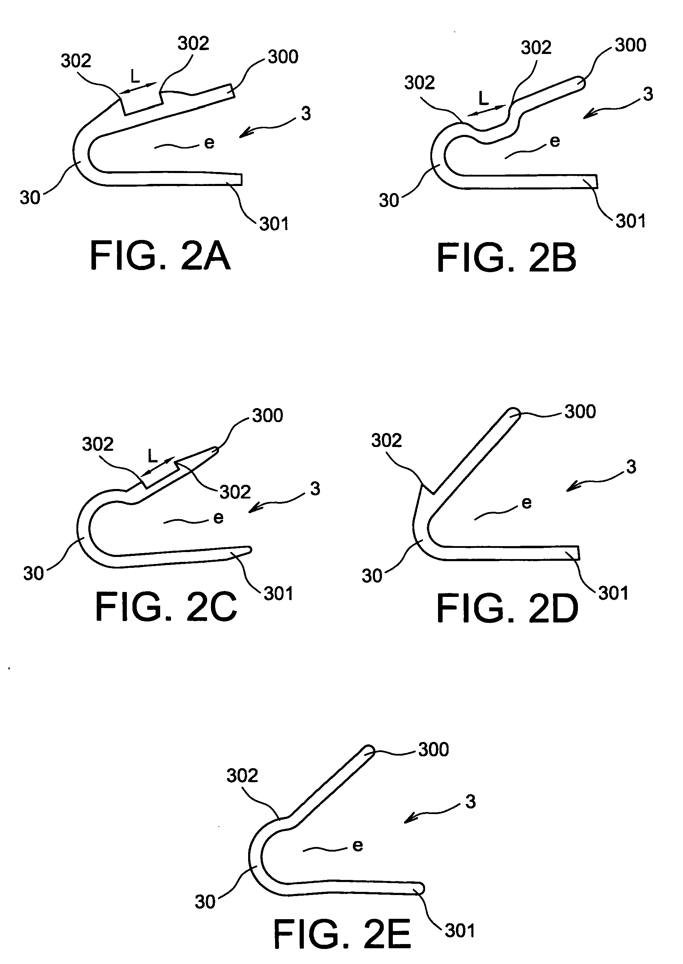

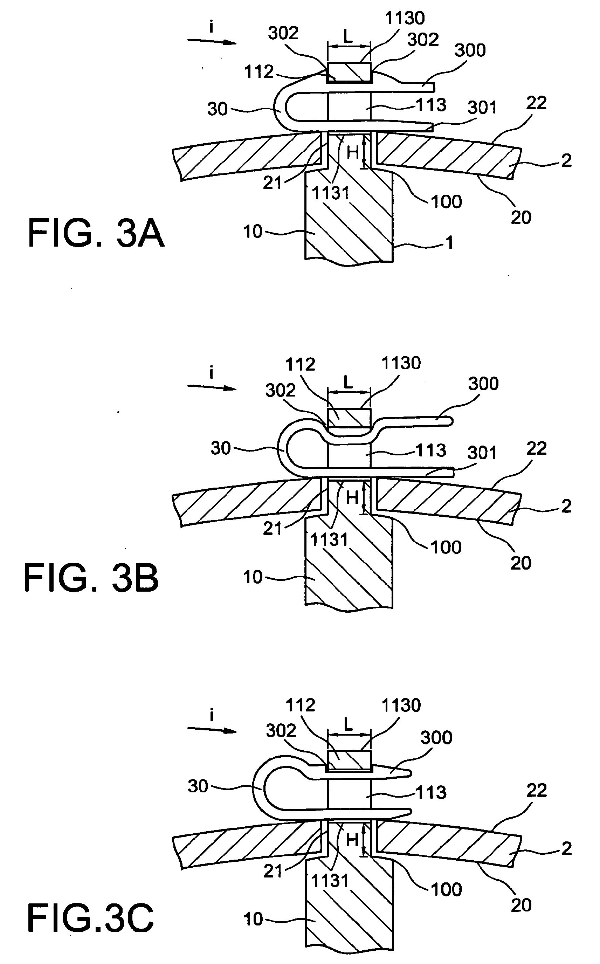

En outre, dans le mode de réalisation illustré, afin d'assurer une précontrainte suffisante, le coin 3 peut être constitué par une plaque recourbée 30 à effet ressort dont l'espace de séparation e entre branches 300, 301 permet de pincer le coin afin de la glisser dans l'ouverture 113 (figures 2A à 3E). Plus exactement, l'une des branches 300 est en contact direct avec la face externe 22 de la virole 2 et l'autre des branches 301 est en contact direct avec le bord externe 1130 de l'ouverture de l'aube 1 (figures 3A à 3E).

Selon que l'aube 1 selon l'invention comporte une plateforme 11 ou non, le calage radial entre l'aube et la virole extérieure est réalisé soit par la plateforme en appui contre la face interne 20 de la virole 2 (figure 1), soit par le dessus 100 de l'aube 1 (figures 3A à 3E). Selon une réalisation préférée, le bord interne 1131 fait saillie soit de la face externe 111 de la plate-forme 11, soit du dessus 100 de la pale 10 à une hauteur H inférieure à l'épaisseur de la virole 2, pour permettre un bon contact entre les surfaces 100 et 20.

Le maintien en position du coin est avantageusement assuré par un ou deux crans 302. Lorsqu'il y a deux crans 302, ceux-ci sont distants d'une distance sensiblement égale à la largeur L du bord externe 1130 de l'ouverture 113.

Le matériau du coin 3 est choisi judicieusement en fonction des caractéristiques d'amortissement recherchées pour obtenir le comportement dynamique vibratoire souhaité de l'étage de redresseur lors du fonctionnement du turboréacteur. Par exemple, le coin peut être une masse 31 en matériau compressible avec un niveau de compressibilité déterminé pour obtenir une précontrainte radiale de l'aube donnée (figure 1). Le coin peut également incorporer une masse en matériau piézoélectrique pour permettre un amortissement actif de la structure de l'étage selon l'invention, par action électrique permettant une déformation mécanique du coin.

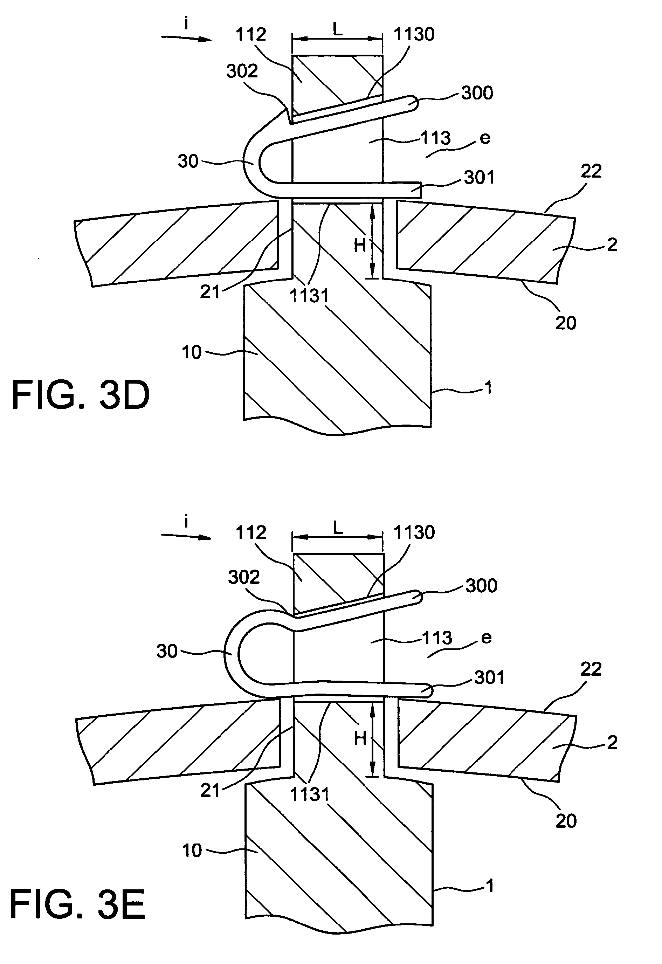

Lorsque le coin 3 est constitué uniquement par une plaque recourbée 30 à effet ressort, deux variantes d'insertion peuvent être prévue :
- les bords interne 1131 et externe 1130 de l'ouverture 113 de l'aube 1 sont parallèles entre eux et les branches 300, 301 de la plaque en position insérée sont rapprochées mutuellement en formant un U (figures 3A à 3C) ;
- les bords interne 1131 et externe 1130 de l'ouverture 113 forment une portion tronconique droite avec le bord externe 1130 et les branches 300, 301 de la plaque en position insérée sont rapprochées mutuellement en formant un V (figures 3D et 3E).

Les bords interne 1131 et externe 1130 de l'ouverture 113 forment avantageusement un plan orthogonal à la surface externe 22 de la virole 2 au niveau des ajours 21.

Différents matériaux métalliques peuvent être utilisés pour la réalisation de la plaque recourbée 30 à effet ressort. Il peut s'agir de préférence d'acier, de type 17-4 PH ou AISI 302.

Différentes techniques de fabrication peuvent être utilisées pour la réalisation de la plaque 30. Il peut s'agir d'une pièce usinée (figures 2A et 2D), d'une tôle déformée (figures 2B et 2E) ou d'une plaque forgée (figure 2C).

Le montage d'une aube 1 dans la virole extérieure 2, tel que représenté en figure 1, est réalisé selon les étapes b) à e) suivante. Au préalable, selon une étape a), l'aube 1 est réalisée avec une partie centrale formant pale 10, une plateforme 11 transversale à la pale et une anse saillante 112 munie de l'ouverture 113 et qui s'étend dans le prolongement de la pale à l'extérieur de la plateforme. Au préalable également, l'extrémité de la pale 10, non représentée, est fixée à la virole intérieure de l'étage de redresseur. Selon une variante où la virole intérieure est segmentée, l'extrémité de la pale 10 peut être fixée à un segment de la virole intérieure, ultérieurement à l'étape e/.

Etape b) : la plateforme 11 de l'aube est emboitée dans le creux correspondant de la face interne 20 de la virole 2, l'anse 112 passant au travers d'un trou ou ajour oblong 21 de formes complémentaires.

Etape c) : le contact entre la face externe 111 de la plateforme 11 et la face interne 20 de la virole est ensuite établi avec la pression requise grâce à une traction exercée sur l'anse 112 vers l'extérieur, la virole extérieure 2 étant maintenue par des moyens appropriés, tels que des clames.

Etape d) : une fois que la traction est suffisante, le coin massif 31 est inséré selon le sens de montage i avec contact direct entre la face externe 22 de la virole 2 et le bord externe 1130 de l'ouverture 113 de l'anse 112. Selon une variante lorsque le coin est constitué d'une plaque métallique recourbée à effet ressort, cette dernière peut être pincée avant son introduction dans l'ouverture 113.

Etape e) : lorsque le coin 31 a été inséré, la traction sur l'anse 112 est enlevée, et l'aube 1 est maintenue en place par la raideur propre du coin massif 31.

Les mêmes étapes a) à e) sont réalisées dans la configuration où l'aube ne comprend pas de plateforme pour aboutir à une fixation analogue (figures 3A à 3E).

Le choix judicieux du matériau du coin 3 soit sous forme d'une plaque recourbée 30 soit sous forme d'une pièce massive 31, ainsi que sa raideur permet de modifier le comportement dynamique de l'aube 1, de déplacer les fréquences propres de l'étage de redresseur ainsi assemblé vers des zones de faible excitation et d'atténuer, voire d'annuler, les amplitudes des réponses des modes les plus critiques. L'emploi de matériau piézoélectrique pour les coins 3 est possible et permet un contrôle actif des vibrations de l'étage assemblé permettant une atténuation forte des réponses vibratoires lorsque le turboréacteur muni de l'étage est en fonctionnement.

Ainsi selon l'invention, on réalise un dispositif de fixation à double fonctionnalité qui permet une fixation efficace et également la possibilité de modification du comportement fréquentiel de l'assemblage aube-virole.

La fixation de l'aube avec la virole selon l'invention qui vient d'être décrite présente de nombreux avantages :
- amélioration, grâce à la précontrainte radiale, de la raideur de la liaison par rapport aux types de liaison connus à ce jour,
- possibilité de fixation quels que soient les matériaux constituant cette dernière, et notamment la fixation d'une aube à une virole en matériaux composites,
- garantie d'une veine plus lisse qu'avec une soudure traditionnelle, avec un poids moindre que les assemblages boulonnés,
- suppression du risque d'injection de débris dans la veine fluide en cas de rupture d'une fixation puisque le coin selon l'invention se trouve à l'extérieur de la virole,
- possibilité, d'un meilleur contrôle des vibrations de l'aube, et de là des conceptions de pales plus légères. En effet, il est possible de modifier le comportement vibratoire de l'étage de stator, grâce aux caractéristiques de raideur et d'amortissement intrinsèques du coin, passives (utilisation d'un matériau compressible et/ou d'une pièce à effet ressort) ou actives (utilisation de piézoélectriques dans le coin). Cette fonctionnalité peut s'avérer intéressante également pour contrecarrer le phénomène de flottement qui peut apparaître sur des pales fortement élancées et très flexibles.

## Revendications

1. Etage de stator comprenant au moins une virole extérieure (2) dont la périphérie est munie d'ajours (21), et une pluralité d'aubes (1) fixes comprenant une extrémité logée dans un des ajours (21) en faisant saillie à l'extérieur de la virole, dans lequel la fixation d'une aube avec la virole extérieure (2) est réalisée par un élément formant coin (3, 30, 31) inséré dans une ouverture (113) pratiquée à l'extrémité de l'aube (1) logée dans l'ajour (21), la forme, la raideur propre et les dimensions du coin (3, 30, 31) et la forme et les dimensions de l'ouverture (113) étant choisies pour mettre en précontrainte radiale l'aube vers l'extérieur.

2. Etage de stator selon la revendication 1, dans lequel le coin (3, 30, 31) est choisi de manière à modifier le comportement fréquentiel de l'étage de stator par action sur ledit coin.

3. Etage de stator selon la revendication 1, dans lequel le coin comprend une masse en matériau piézoélectrique.

4. Etage de stator selon l'une des revendications 1 à 3, dans lequel les aubes (1) comprennent chacune une partie (11) formant plateforme à l'extrémité de la partie centrale (10) formant pale et, en contact avec la face interne (20) de la virole, la plate-forme (11) étant prolongée d'une anse saillante (112) vers l'extérieur munie de l'ouverture (113) dans laquelle est inséré le coin (3, 30, 31).

5. Etage de stator selon l'une quelconque des revendications précédentes, dans lequel le coin comprend une masse (31) en matériau compressible, le matériau étant au moins en partie compressé en position insérée.

6. Etage de stator selon l'une quelconque des revendications précédentes, dans lequel le coin comprend une plaque recourbée (30) et à effet ressort, les branches (300, 301) de la plaque en position insérée étant rapprochées mutuellement, avec l'une des branches (300) en contact avec la face externe (22) de la virole et l'autre (301) des branches en contact avec le bord externe (1130) de l'ouverture (113).

7. Etage de stator selon la revendication 6, dans lequel le bord externe (1130) de l'ouverture est orthogonal à l'aube, les branches (300, 301) de la plaque insérée formant un U.

8. Etage de stator selon la revendication 6, dans lequel le bord externe (1130) de l'ouverture n'est pas orthogonal à l'aube, les branches (300, 301) de la plaque insérée formant un V.

9. Etage de stator selon l'une des revendications 6 à 8, dans lequel la branche (301) en contact avec le bord externe (1130) de l'ouverture comporte au moins une excroissance (302) formant cran permettant le maintien en position insérée du coin lors du fonctionnement de la turbomachine dans lequel l'étage de stator est intégré.

10. Etage de stator selon la revendication 9, comprenant deux crans (302) séparés d'une distance sensiblement égale à la largeur (L) du bord externe (1130) de l'ouverture (113) avec laquelle ils sont en contact.

11. Etage de stator selon l'une des revendications 6 à 10, dans lequel la plaque recourbée est réalisée à partir d'une pièce métallique usinée.

12. Etage de stator selon l'une des revendications 6 à 10, dans lequel la plaque recourbée (30) est réalisée à partir d'une tôle déformée.

13. Etage de stator selon l'une des revendications 6 à 10, dans lequel la plaque recourbée (30) est réalisée à partir d'une pièce forgée.

14. Etage de stator selon l'une quelconque des revendications 1 à 13 constituant un étage de redresseur de compresseur d'un turboréacteur.

15. Turbomachine comprenant au moins un étage de stator selon l'une quelconque des revendications 1 à 14.

16. Procédé de fixation d'une aube à une virole extérieure (2) d'étage de stator dans lequel on réalise les étapes suivantes :
a) réalisation d'une aube (1) avec une partie centrale (10) formant pale et une ouverture (113) à une extrémité de la pale,
b) logement de l'extrémité avec ouverture (113) dans un ajour (21) pratiqué dans une virole (2) de l'étage de stator,
c) traction sur l'aube (1) vers l'extérieur de sorte à avoir une partie de l'ouverture (113) à l'extérieur de la virole et à atteindre une précontrainte radiale de l'aube,
d) insertion d'un élément formant coin (3, 30, 31) dans l'ouverture (113) avec contact avec la virole,
e) relâchement de la traction sur l'aube, la forme, la raideur propre et les dimensions du coin (3, 30, 31) et la forme et les dimensions de l'ouverture (113) étant choisies pour mettre en précontrainte radiale l'aube (1) vers l'extérieur après l'étape e).

17. Procédé selon la revendication 16, dans lequel la virole (2) à laquelle est fixée l'aube est la virole extérieure (2) de l'étage de stator et dans lequel on réalise au préalable de l'étape b) une fixation de l'aube avec la virole intérieure de l'étage de stator sans précontrainte radiale.

18. Procédé selon la revendication 16 ou 17, dans lequel on réalise :
- l'étape a) avec une partie de l'aube formant plateforme (11) transversale à la pale (10),
- la précontrainte radiale de l'aube selon l'étape c) avec contact entre la plateforme (11) et la virole (2).

## Claims

1. A stator stage comprising at least an outer frame (2), the periphery of which is provided with holes (21), and a plurality of fixed blades (1) including an end accommodated in one of the holes (21) protruding outside the frame, wherein the fixing of a blade to the outer frame (2) is achieved by an element forming a wedge (3, 30, 31) inserted in an opening (113) cut at the blade end accommodated in the hole (21), the shape, the own stiffness and the size of the wedge (3, 30, 31) and the shape and the size of the opening (113) being selected such that to generate radial preloading on the blade towards the exterior.

2. A stator stage according to claim 1, wherein the wedge (3, 30, 31) is selected to modify the frequential behavior of the stator stage by action on the wedge.

3. A stator stage according to claim 1, wherein the wedge includes a mass of piezoelectric material.

4. A stator stage according to any of claims 1 to 3, wherein each of the blades (1) comprises a part (11) forming a platform at the end of the central part (10) forming airfoil and in contact with the internal face (20) of the frame (2), the platform (11) being extended of a handle (112) protruding towards the outside end provided with the opening (113) in which the wedge (3, 30, 31) is inserted.

5. A stator stage according to anyone of the preceding claims, wherein the wedge includes a mass (31) of compressible material, the material being at least partially compressed in the inserted position.

6. A stator stage according to anyone of the preceding claims, wherein the wedge includes a curved plate (30) with spring-like effect, the branches (300, 301) of the plate being mutually closed in the inserted position with one (300) of the branches in contact with the external face (22) of the frame and the other (301) of the branches in contact with the external edge (1130) of the opening (113).

7. A stator stage according to claim 6, wherein the external edge (1130) of the opening is perpendicular to the blade, the branches (300, 301) of the inserted plate forming a U shape.

8. A stator stage according to claim 6, wherein the external edge (1130) of the opening is not perpendicular to the blade, the branches (300, 301) of the inserted plate forming a V shape.

9. A stator stage according to any of claims 6 to 8, wherein the branch (301) in contact with the external edge (1130) of the opening includes a protuberance (302) forming a notch allowing the holding of the wedge in the inserted position during the operation of the turbine engine in which the stator stage is integrated.

10. A stator stage according to claim 9, including two notches (302) separated from each other by a distance approximately equal to the width (L) of the external edge (1130) of the opening (113) with which they are in contact.

11. A stator stage according to any of claims 6 to 10, wherein the curved plate (30) is realized from a machined metallic piece.

12. A stator stage according to any of claims 6 to 10, wherein the curved plate (30) is realized from a deformed sheet metal.

13. A stator stage according to any of claims 6 to 10, wherein the curved plate (30) is realized from a forged piece.

14. A stator stage according to any of claims 1 to 13, constituting a stage of a compressor stator of a jet engine.

15. A turbomachine comprising at least a stator stage according to any of claims 1 to 14.

16. A method for fixing a blade to an outside frame (2) of a stator stage, the method comprising the following steps:
a/ achieving a blade (1) with a central part (10) forming airfoil and an opening (113) at one end of the airfoil,
b/ accommodating the end with the opening in a hole (21) provided in a frame (2) of the stator stage,
c/ pulling on the blade (1) towards the exterior such that a part of the opening (113) is outside the frame and to obtain a radial preload on the blade,
d/ inserting an element forming a wedge (3, 30, 31) in the opening (113) with contact with the frame,
e/ release the pulling on the blade, the shape, the shape, the own stiffness and the size of the wedge (3, 30, 31) and the shape and the size of the opening (113) being selected such that to generate radial preloading on the blade towards the exterior after step e/.

17. A method according to claim 16, in which the frame (2) to which the blade is fixed is the outside frame (2) of the stator stage and in which before step b/ it is achieved a fixing of the blade with the inside frame of the stator stage without radial preload.

18. A method cording to claim 16 or 17, in which
- step a/ is achieved with the part of the blade forming a plateform (11) being transverse to the airfoil (10),
- the radial preload of the blade according to step c/ is achieved with contact between the plateform (11) and the frame (2).

## Patentansprüche

1. Statorstufe mit wenigstens einem äußeren Ring (2), dessen Umfang mit Durchbrüchen (21) ausgestattet ist, und mehreren festgesetzten Schaufeln (1) mit einem Ende, das in einem der Durchbrüche (21) untergebracht ist, wobei es außerhalb des Rings vorspringt, bei welcher die Befestigung einer Schaufel an dem äußeren Ring (2) durch ein einen Keil (3, 30, 31) bildendes Element durchgeführt wird, das in eine Öffnung (113) eingefügt ist, die am Ende der Schaufel (1) vorgesehen ist, das in dem Durchbruch (21) untergebracht ist, wobei die Form, die Eigensteifigkeit und die Abmessungen des Keils (3, 30, 31) sowie die Form und die Abmessungen der Öffnung (113) gewählt sind, um die Schaufel nach außen radial vorzuspannen.

2. Statorstufe nach Anspruch 1, bei welcher der Keil (3, 30, 31) derart gewählt ist, dass er das Frequenzverhalten der Statorstufe durch Wirkung auf den Keil modifiziert.

3. Statorstufe nach Anspruch 1, bei welcher der Keil eine Masse aus piezoelektrischem Material aufweist.

4. Statorstufe nach einem der Ansprüche 1 bis 3, bei welcher die Schaufeln (1) jeweils einen Teil (11) aufweisen, der eine Plattform am Ende des zentralen Teils (10) aufweist, der ein Blatt bildet, wobei in Kontakt mit der Innenseite (20) des Rings die Plattform (11) um einen nach außen vorspringenden Henkel (112) verlängert ist, der mit der Öffnung ausgestattet ist, in den der Keil (3, 30, 31) eingefügt ist.

5. Statorstufe nach einem der vorhergehenden Ansprüche, bei welcher der Keil eine Masse (31) aus kompressiblem Material aufweist, wobei das Material wenigstens teilweise in der eingefügten Position komprimiert ist.

6. Statorstufe nach einem der vorhergehenden Ansprüche, bei welcher der Keil eine rückgebogene Platte (30) mit Federwirkung aufweist, wobei die Schenkel (300, 301) der Platte in der eingefügten Position einander angenähert sind, mit einem der Schenkel (300) in Kontakt mit der Außenseite (22) des Rings und dem anderen (301) der Schenkel in Kontakt mit dem äußeren Rand (1130) der Öffnung (113).

7. Statorstufe nach Anspruch 6, bei welcher der äußere Rand (1130) der Öffnung zu der Schaufel orthogonal ist, wobei die Schenkel (300, 301) der eingefügten Platte ein U bilden.

8. Statorstufe nach Anspruch 6, bei welcher der äußere Rand (1130) der Öffnung nicht zu der Schaufel orthogonal ist, wobei die Schenkel (300, 301) der eingefügten Platte ein V bilden.

9. Statorstufe nach einem der Ansprüche 6 bis 8, bei welcher der Schenkel (301) in Kontakt mit dem äußeren Rand (1130) der Öffnung wenigstens einen Vorsprung (302) aufweist, der eine Raste bildet, welche den Halt des Keils in eingefügter Position beim Betrieb der Turbomaschine ermöglicht, in welche die Statorstufe integriert ist.

10. Statorstufe nach Anspruch 9, mit zwei Rasten (302), die um einen Abstand im Wesentlichen gleich der Breite (L) des äußeren Randes (1130) der Öffnung getrennt sind, mit welcher sie in Kontakt stehen.

11. Statorstufe nach einem der Ansprüche 6 bis 10, bei welcher die krumme Platte ausgehend von einem bearbeiteten Metallteil hergestellt ist.

12. Statorstufe nach einem der Ansprüche 6 bis 10, bei welcher die krumme Platte (30) ausgehend von einem verformten Blech hergestellt ist.

13. Statorstufe nach einem der Ansprüche 6 bis 10, bei welcher die krumme Platte (30) ausgehend von einem Schmiedeteil hergestellt ist.

14. Statorstufe nach einem der Ansprüche 1 bis 13, die eine Leitapparatstufe für den Verdichter eines Strahltriebwerks bildet.

15. Turbomaschine, die wenigstens eine Statorstufe nach einem der Ansprüche 1 bis 14 aufweist.

16. Verfahren zur Befestigung einer Schaufel an einem äußeren Statorstufenring (2), bei welchem die folgenden Schritte durchgeführt werden:
a) Herstellung einer Schaufel (1) mit einem zentralen Teil (10), der ein Blatt bildet, und einer Öffnung (113) an einem Ende des Blatts,
b) Unterbringen des Endes mit Öffnung (113) in einem Durchbruch (21), der in einem Ring (2) der Statorstufe vorgesehen ist,
c) Zug an der Schaufel (1) nach außen, sodass ein Teil der Öffnung (113) außerhalb des Rings liegt und eine radiale Vorspannung der Schaufel erreicht ist,
d) Einfügen eines einen Keil (3, 30, 31) bildenden Elements in die Öffnung (113) in Kontakt mit dem Ring,
e) Lockerung des Zugs auf die Schaufel, wobei die Form, die Eigensteifigkeit und die Abmessungen des Keils (3, 30, 31) sowie die Form und die Abmessungen der Öffnung (113) gewählt sind, um die Schaufel (1) nach dem Schritt e) nach außen radial vorzuspannen.

17. Verfahren nach Anspruch 16, bei welchem der an der Schaufel befestigte Ring (2) der äußere Ring der Statorstufe ist, und bei welchem vor dem Schritt b) eine Befestigung der Schaufel mit dem inneren Ring der Statorstufe ohne radiale Vorspannung durchgeführt wird.

18. Verfahren nach Anspruch 16 oder 17, bei welchem man durchführt:
- den Schritt a) mit einem Teil der Schaufel, der eine Plattform (11) bildet, quer zu dem Blatt (10),
- die radiale Vorspannung der Schaufel nach dem Schritt c) mit Kontakt zwischen der Plattform (11) und dem Ring (2).
